# EUROPÄISCHE PATENTANMELDUNG

(11) **EP 1 093 120 A1**
(43) Veröffentlichungstag der Anmeldung: **18.04.2001**
(21) Anmeldenummer: 00111143.4
(22) Anmeldetag: 24.05.2000
(51) Int. Cl.: G11B 20/00, G06F 9/445

(54) **Plattenförmiges optisches Speichermedium**

(30) Priorität: 30.09.1999 DE 29917222 U
(71) Anmelder: SONOPRESS PRODUKTIONSGESELLSCHAFT FÜR TON- UND INFORMATIONSTRÄGER mbH, 33332 Gütersloh (DE)
(72) Erfinder: Indenbirken, Heiko, 33739 Bielefeld (DE)

(57) **Zusammenfassung**

Plattenförmiges optisches Speichermedium der CD-Familie mit im Format der CD Digital Audio aufgezeichneten Daten, dadurch gekennzeichnet, daß die insgesamt für die Datenaufzeichnung verfügbare Fläche in mindestens eine innere und eine diese ringförmig umgebene, äußere Aufzeichnungsfläche (Recording Area) unterteilt ist, auf deren jeder die Daten in dem Format der CD aufgezeichnet sind, daß die Table of Contents (TOC) in der Lead-in-Area der inneren Aufzeichnungsfläche einen Datensatz umfaßt, der auf die äußere Aufzeichnungsfläche und deren TOC verweist, daß letztere eine Datei "autorun.inf" umfaßt, welche eine von einem Rechner unter Windows 95/98/NT ausführbare Anweisung enthält, die nach dem Einlegen des Speichermediums in ein CD-ROM-Laufwerk des Rechners ein Programm startet, das das Auslesen aller weiteren, auf dem Speichermedium gespeicherten Daten verhindert.

## Beschreibung

Die Erfindung betrifft ein plattenförmiges optisches Speichermedium der CD-Familie.

Dieser Familie, die im einzelnen in der Veröffentlichung "The CD-Family" der Philips Consumer Electronics B.V. beschrieben ist, gehören u.a. die CD Digital Audio, kurz CD-Audio, die CD-ROM und die Multisession-CD an.

Eine CD-Audio ist nicht nur in einem CD-Player, sondern auch in einem CD-ROM-Laufwerk auslesbar. Dieser Umstand wird in großem Umfang zur unerlaubten Vervielfältigung von CD-Audios ausgenutzt. Die zu kopierende CD-Audio wird in das CD-ROM-Laufwerk eines Rechners, gewöhnlich eines PCs, eingelegt und der ausgelesene Datenstrom, der entsprechend dem Red Book formatiert ist, als Datei gespeichert, von der sich dann beliebig viele Kopien auf beliebigen Medien herstellen lassen.

Der Erfindung liegt die Aufgabe zugrunde, ein optisches Speichermedium zu schaffen, das äußerlich identisch und hinsichtlich der Formatierung der aufgezeichneten Daten weitgehend identisch mit der CD-Audio ist, jedoch einen Kopierschutz enthält, der das oben beschriebene Kopieren unter Verwendung eines Rechners mit einem CD-ROM-Laufwerk verhindert, ohne die Auslesbarkeit des Speichermediums in allen üblichen CD-Playern zu verhindern.

Diese Aufgabe ist erfindungsgemäß dadurch gelöst, daß die insgesamt für die Datenaufzeichnung verfügbare Fläche in mindestens eine radial innere und eine diese ringförmig umgebende, äußere Aufzeichnungsfläche unterteilt ist, auf deren jeder die Daten in dem Format der CD aufgezeichnet sind, daß die Table of Contents (TOC) des Q-Kanals des Subcodes in der Lead-in Area der inneren Aufzeichnungsfläche einen Datensatz umfaßt, der auf die äußere Aufzeichnungsfläche und deren TOC verweist und daß die Program Area der äußeren Aufzeichnungsfläche eine Datei "autorun.inf" umfaßt, welche eine von einem Rechner unter Windows 95/98/NT ausführbare Anweisung enthält, die nach dem Einlegen des Speichermediums in ein CD-ROM-Laufwerk des Rechners ein Programm startet, das das Auslesen aller weiteren auf dem Speichermedium gespeicherten Daten verhindert.

Die Erfindung macht sich dabei folgendes zunutze:

Bei einer CD-Audio ist die insgesamt für die Datenaufzeichnung verfügbare Fläche, die sogenannte Recording Area, von innen nach außen in eine Lead-in Area, eine Program Area mit einer Anzahl die Nutzinformationen enthaltenden Tracks und eine Lead-out Area unterteilt. Zusätzlich zu dem die Nutzinformationen enthaltenden (Audio-)Kanal gibt es einen definierten Subcode, der als eigener Kanal betrachtet werden kann, jedoch seinerseits in Subcode-Kanäle P bis W unterteilt ist. Hiervon enthält der Q-Kanal in der Lead-in Area eine Table of Contents, kurz TOC, die ihrerseits bestimmte Steuer- und Informationsdaten umfaßt.

Bei der Multisession-CD ist hingegen die für die Datenaufzeichnung verfügbare Fläche in mehrere sogenannte Sessions aufgeteilt. Jede Session ist ihrerseits wie eine vollständige CD formatiert, umfaßt also eine Lead-in Area, eine Program Area und eine Lead-out Area. Abweichend von der CD-Audio enthält jedoch die TOC der ersten Session zusätzlich einen Hinweis auf die nächste Session und deren TOC. Ein CD-Audio Player erkennt diesen Hinweis nicht und liest die Session 1 einer Multisession-CD aus wie eine CD-Audio. Hingegen erkennt ein CD-ROM-Laufwerk, in das eine Multisession-CD eingelegt wird, den Hinweis in der TOC der ersten Session auf die TOC der zweiten Session und ist so konfiguriert, daß der Lesekopf - wie im Fall einer CD-ROM - dann sofort auf die TOC der zweiten Session springt. Diese Program Area der Session 2 enthält eine Datei "autorun.inf", die nach dem Auslesen einen unter Windows 95/98/NT laufenden Rechner veranlaßt, vorgegebene, in seinem Programm abgelegte Befehle auszuführen, z.B. auf dem Bildschirm ein Auswahlmenu zu präsentieren, das Auslesen der ersten Session zu starten, usw.

Im Rahmen der Erfindung enthält die Datei "autorun.inf" eine Datei mit Steuerbefehlen, die in dem Rechner ein Programm starten, das das Auslesen aller weiteren, auf dem Speichermedium gespeicherten Daten verhindert. Die zusätzlichen Steuerbefehle in der Datei "autorun.inf" können weitere Unterprogramme des Rechners starten, insbesondere ein ausführbares Programm zum Öffnen der Schublade des CD-ROM-Laufwerks, die Anzeige eines Warnhinweises auf dem Bildschirm, daß das Kopieren untersagt ist, die Aufforderung, das Speichermedium vor Ablauf einer vorgegebenen Zeit zu entnehmen, andernfalls bestimmte Dateien oder das gesamte Betriebsprogramm unbrauchbar gemachet werden, usw.

Die äußere Aufzeichnungsfläche ist also als zweite Session konfiguriert. Diese muß lediglich aus mindestens einer ausführbaren Programmdatei mit der erfindungsgemäß modifizierten Datei "autorun.inf" in deren Program Area bestehen.

Die Erfindung schlägt mithin ein Speichermedium vor, das für einen CD-Player wie eine CD-Audio konfiguriert und insoweit voll kompatibel mit CD-Audios ist, jedoch für ein CD-ROM-Laufwerk, bzw. einen damit ausgestatteten Rechner analog einer Multisession-CD oder eine CD-ROM konfiguriert ist und durch die in der zweiten Session enthaltene, modifizierte Datei "autorun.inf" kopiergeschützt ist, weil die Audiodaten nicht auslesbar sind.

## Patentansprüche

1. Plattenförmiges optisches Speichermedium der CD-Familie mit im Format der CD Digital Audio aufgezeichneten Daten, **dadurch gekennzeichnet**, daß die insgesamt für die Datenaufzeichnung verfügbare Fläche in mindestens eine innere und eine diese ringförmig umgebende, äußere Aufzeichnungsfläche (Recording Area) unterteilt ist, auf deren jeder die Daten in dem Format der CD aufgezeichnet sind, daß die Table of Contents (TOC) in der Lead-in Area der inneren Aufzeichnungsfläche einen Datensatz umfaßt, der auf die äußere Aufzeichnungsfläche und deren TOC verweist, daß letzere eine Datei "autorun.inf" umfaßt, welche eine von einem Rechner unter Windows 95/98/NT ausführbare Anweisung enthält, die nach dem Einlegen des Speichermediums in ein CD-ROM-Laufwerk des Rechners ein Programm startet, das das Auslesen aller weiteren, auf dem Speichermedium gespeicherten Daten verhindert.

2. Datenträger nach Anspruch 1, dadurch gekennzeichnet, daß die Program Area der äußeren Aufzeichnungsfläche aus einer Datei "autorun.inf" einschließlich der die Anweisung an den Rechner umfassenden TOC besteht.
